# EUROPÄISCHE PATENTSCHRIFT

(11) **EP 3 240 149 B1**
(45) Veröffentlichungstag und Bekanntmachung des Hinweises auf die Patenterteilung: **26.06.2019**
(21) Anmeldenummer: 17000624.1
(22) Anmeldetag: 12.04.2017
(51) Int. Cl.: H02K 3/38, H02K 3/50

(54) **VERFAHREN ZUR HERSTELLUNG EINES STATORS EINER ELEKTRISCHEN MASCHINE**
METHOD FOR MANUFACTURING A STATOR OF AN ELECTRIC MACHINE
PROCÉDÉ DE FABRICATION D'UN STATOR D'UNE MACHINE ÉLECTRIQUE

(30) Priorität: 29.04.2016 DE 102016005176
(43) Veröffentlichungstag der Anmeldung: 01.11.2017
(73) Patentinhaber: AUDI AG, 85045 Ingolstadt (DE)
(72) Erfinder: Stenzel, Peer, 85051 Ingolstadt (DE)
(74) Vertreter: Eickmeyer, Dietmar

(56) Entgegenhaltungen:
- DD-B5- 288 940
- DE-U1- 20 102 590
- US-A1- 2015 207 375

## Beschreibung

Die Erfindung betrifft ein Verfahren zur Herstellung eines Stators einer elektrischen Maschine. Daneben betrifft die Erfindung einen Stator für eine elektrische Maschine sowie eine elektrische Maschine.

Auf Statoren für elektrische Maschinen werden typischerweise Spulen gewickelt, um ein magnetisches Feld zu erzeugen. Konzentrierte oder verteilte Wicklungen lassen sich durch die bekannte Nadelwickeltechnologie herstellen. Bei diesem Verfahren wird der Draht mit einer Wickelnadel unter Zug in Nuten des Statorjochs abgelegt. Bei der Wickelnadel kann es sich um eine drahtführende Düse handeln, die im Inneren vorzugsweise rotationssymmetrisch ausgebildet ist.

Insbesondere bei Drehstrommaschinen sollen typischerweise Wicklungen auf dem Stator aufgebracht werden, die verschiedenen Phasen zugeordnet sind. Diese Wicklungen sind gegeneinander zu isolieren, da die einzelnen Phasen beim Betrieb auf unterschiedlichen Spannungsniveaus liegen. Hierzu werden im Stand der Technik kalandrierte Isolierpapiere genutzt, die auf die einzelnen Wicklungen gelegt oder geklebt werden.

Sollen sogenannte verteilte Wicklungen auf das Statorjoch aufgebracht werden, bei denen zwischen zwei Nuten einer Wicklung mehrere Nuten liegen, die freibleiben bzw. durch die in einem früheren oder späteren Prozessschritt Wicklungen einer anderen Phase geführt werden, so wäre eine Phasenisolation durch kalandriertes Isolierpapier sehr aufwändig, da die einzelnen Wicklungen sowohl in axialer als auch in radialer Richtung gegeneinander isoliert werden müssten, wodurch mehrere einzelne Papierstücke zur Isolation erforderlich wären. Dies erhöht den Zeitbedarf der Statorherstellung und kann zu einer fehlerhaften Isolation führen.

Daher ist es im Stand der Technik üblich, sogenannte Endscheiben zu nutzen, die an den Stirnflächen des Stators angeordnet werden und einerseits den Spulendraht im Rahmen der Wicklung haltern und andererseits der Isolation der einzelnen Phasen gegeneinander dienen. Entsprechende Endscheiben sind aus den Druckschriften DE 10 2005 002 364 B4 und DE 10 2011 008 662 A1 bekannt. Ein Nachteil dieser Endscheiben ist, dass die Wicklungen im Bereich der Stirnflächen des Statorjochs nach dem Wickeln nicht komprimiert werden können, da in diesem Bereich die die Wicklungen haltenden Endscheiben angeordnet sind. Soll auf diese Endscheiben verzichtet werden, was beispielsweise durch eine anderweitige Halterung des Spulendrahtes während des Wickelvorgangs im Bereich der Stirnflächen des Statorjochs möglich ist, können derartige Endscheiben jedoch nicht zur Isolation genutzt werden.

Aus der Druckschrift DE 201 02 590 U1 ist eine Wicklungsanordnung für eine elektrische Maschine bekannt, deren Wicklungen im Bereich des Wickelkopfes mindestens zwei übereinander liegende Wickellagen bilden. Zwischen den Wickellagen ist jeweils ein im Wesentlichen scheibenförmiges, aus elastisch verformbarem, elektrisch isolierendem Material bestehendes Trennelement im Wesentlichen spaltfrei an die Wicklungen angeschmiegt angeordnet.

Eine Anordnung zur Phasenisolation innerhalb eines Wickelkopfes einer elektrischen Maschine ist aus der Druckschrift DD 288 940 B5 bekannt. Hierbei werden Endscheiben aus einem isolierten Werkstoff genutzt, die im Plastspritzverfahren hergestellt werden können.

In der Druckschrift US 2015/0207375 A1 wird ein Isolationselement für rotierende elektrische Maschinen beschrieben, das über Streben verbundene randseitige Abschnitte umfasst.

Der Erfindung liegt daher die Aufgabe zugrunde, ein Verfahren zur Herstellung eines Stators anzugeben, das demgegenüber derart verbessert ist, dass eine effiziente Herstellbarkeit des Stators und eine zuverlässige Phasenisolation erreicht wird, wobei dennoch ein unnötiger Bauraumverbrauch vermieden wird.

Die Aufgabe wird erfindungsgemäß durch ein Verfahren zur Herstellung eines Stators einer elektrischen Maschine gelöst, das die folgenden Schritte umfasst:
- Bereitstellen eines Statorjochs mit mehreren Nuten, die sich zwischen zwei Stirnflächen des Statorjochs erstrecken,
- Aufbringen wenigstens einer einer ersten Phase zugeordneten ersten Wicklung auf das Statorjoch durch Einbringen eines Spulendrahtes in eine erste Gruppe der Nuten derart, dass sich entlang der beiden Stirnflächen des Statorjochs jeweils ein stirnflächenseitiger Abschnitt der ersten Wicklung erstreckt,
- Anordnen jeweils eines formstabilen Isolationselements an beiden Stirnflächen des Statorjochs, wobei das Isolationselement lose auf den jeweiligen stirnflächenseitigen Abschnitt der ersten Wicklung aufgesetzt wird,
- Aufbringen wenigstens einer einer zweiten Phase zugeordneten zweiten Wicklung auf das Statorjoch durch Einbringen des Spulendrahtes in eine zweite Gruppe der Nuten derart, dass sich entlang der von dem Statorjoch abgewandten Außenflächen der Isolationselemente jeweils ein stirnflächenseitiger Abschnitt der zweiten Wicklung erstreckt, wobei die Isolationselemente im Rahmen des Aufbringens der zweiten Wicklung durch ein Wickelwerkzeug gehaltert werden, das nach dem Aufbringen der zweiten Wicklung entfernt wird, wonach die zweite Wicklung die Isolationselemente haltert.

Erfindungsgemäß wird vorgeschlagen, nach dem Wickeln der Wicklung oder der Wicklungen der ersten Phase jeweils ein formstabiles Isolationselement auf die stirnflächenseitigen Abschnitte der ersten Wicklung aufzusetzen. Dieses wirkt als Auflagefläche für die Wicklung oder Wicklungen der zweiten Phase und isoliert diese zudem gegenüber der ersten Phase. Das formstabile Isolationselement kann in einem separaten Produktionsprozess hergestellt werden. Es ermöglicht eine Phasenisolation in einem einfachen Arbeitsschritt durchzuführen, der insbesondere automatisiert durchgeführt werden kann.

Die Isolationselemente können mit dem Statorjoch und/oder der ersten Wicklung verklebt werden, beispielsweise durch eine an einer dem Statorjoch zugewandten Innenseite des Isolationselements angeordnete Haftschicht, oder kraftschlüssig oder insbesondere rastend formschlüssig mit dem Statorjoch und/oder der ersten Wicklung verbunden werden. Es ist jedoch auch möglich, dass die Isolationselemente nur lose aufgelegt werden und im Rahmen des Aufbringens der zweiten Wicklung beispielsweise durch ein Wickelwerkzeug gehaltert werden, das nach dem Aufbringen der zweiten Wicklung entfernt wird, wonach die zweite Wicklung die Isolationselemente haltert. Gegenüber einer Nutzung von kalandriertem Isolationspapier kann die Phasenisolation somit schneller und zuverlässiger durchgeführt werden.

Zugleich kann das Isolationselement jedoch relativ filigran ausgeführt sein, so dass die Nutzung des formstabilen Isolationselements nur zu einer unwesentlichen Erhöhung des Bauraumverbrauchs des fertigen Stators führt. Auch wenn auf jeder Stirnfläche zusätzlich zu dem Isolationselement ein weiteres Isolationselement genutzt wird, um, wie im Folgenden beschrieben, zusätzliche Wicklungen einer dritten Phase von den Wicklungen der ersten und zweiten Phase zu isolieren, kann der Bauraumverbrauch in Axialrichtung durch die Isolationselemente nur wenige Millimeter sein. Beispielsweise kann ein Auflageabschnitt des Isolationselements, der in Axialrichtung des Statorjochs zwischen den Wicklungen der verschiedenen Phasen angeordnet ist und somit jener Teil ist, der zum Bauraumverbrauch des Stators beiträgt, eine Dicke von weniger als einem Millimeter aufweisen. Somit kann der Bauraumverbrauch eines erfindungsgemäß hergestellten Stators deutlich geringer sein als der Bauraumverbrauch eines Stators, der Endscheiben nutzt, die sowohl zur Halterung des Spulendrahtes während des Wickelns als auch zur Isolation der Phasen gegeneinander dienen.

Im erfindungsgemäßen Verfahren kann nach dem Aufbringen der der zweiten Phase zugeordneten Wicklung bzw. Wicklungen an beiden Stirnflächen des Statorjochs jeweils ein weiteres formstabiles Isolationselement angeordnet werden. Hiernach kann wenigstens eine einer dritten Phase zugeordnete dritte Wicklung durch Einbringen des Spulendrahtes in eine dritte Gruppe der Nuten derart auf das Statorjoch aufgebracht werden, dass sich entlang einer von dem Statorjoch abgewandten Außenfläche des jeweiligen weiteren Isolationselements ein jeweiliger stirnflächenseitiger Abschnitt der dritten Wicklung bzw. Wicklungen erstreckt.

Die Isolationselemente bzw. die weiteren Isolationselemente können einen ringförmigen, insbesondere im Wesentlichen ebenen Auflageabschnitt aufweisen, der die Außenfläche ausbildet. Das Statorjoch ist vorzugsweise zylinderförmig. Die Stirnflächen können einander hierbei axial gegenüberliegen. Die Nuten können axial verlaufen.

Vorzugsweise werden Isolationselemente und/oder weitere Isolationselemente verwendet, die jeweils wenigstens einen Axialabschnitt umfassen, der sich nach dem Anordnen des jeweiligen Isolationselements und/oder weiteren Isolationselements an der Stirnfläche gewinkelt zu der Außenfläche in Richtung des Statorjochs erstreckt. Der Axialabschnitt kann axial bezüglich des Statorjochs verlaufen und/oder senkrecht zu der Außenfläche stehen. Der Axialabschnitt des Isolationselements erstreckt sich vorzugsweise bis zum Statorjoch. Er kann die Wicklung oder Wicklungen der ersten Phase in Radialrichtung und/oder in Umfangsrichtung bezüglich des Statorjochs von der Wicklung oder den Wicklungen der zweiten Phase trennen. Zumindest Teile der Axialabschnitte liegen vorzugsweise jeweils in einer Ebene, die durch einen Vektor in Radialrichtung des Statorjochs und durch einen Vektor in Axialrichtung des Statorjochs aufgespannt ist. Die Isolationselemente und/oder die weiteren Isolationselemente können aus Kunststoff spritzgegossen werden.

Ausführungen zu den Isolationselementen gelten auch für weitere Isolationselemente, die, wie erläutert, genutzt werden können um eine oder mehrere Wicklungen der zweiten Phase von einer oder mehreren Wicklungen einer dritten Phase zu trennen. Die Axialabschnitte des weiteren Isolationselements können sich nach der Anordnung am Statorjoch zumindest teilweise bis zu dem Isolationselement und/oder bis zum Statorjoch erstrecken.

Die erste und/oder die zweite und/oder die dritte Wicklung können durch Nadelwickeln auf das Statorjoch aufgebracht werden. Hierbei kann der Spulendraht der ersten und/oder der zweiten und/oder der dritten Wicklung während des Nadelwickelns stirnflächenseitig durch wenigstens ein trennbar mit dem Statorjoch verbundenes Wickelwerkzeug gehaltert werden, das nach dem Aufbringen der wenigstens einen Wicklung der jeweiligen Phase von dem Statorjoch entfernt wird. Das Wickelwerkzeug kann zusätzlich oder alternativ auch die Isolationselemente und/oder die weiteren Isolationselemente haltern. Ein Wickelwerkzeug kann beispielsweise in Nuten gehaltert sein, in die für die jeweilige Phase kein Spulendraht eingebracht wird. Das Wickelwerkzeug kann zumindest stirnflächenseitig diese Nuten verdecken, so dass sie für darauffolgende Wickelvorgänge freigehalten werden. Das Wickelwerkzeug kann vor oder nach einem Pressvorgang, der die jeweiligen Wicklungen im Bereich der Stirnseite des Statorjochs presst, entfernt werden.

Die erste und/oder die zweite und/oder die dritte Wicklung können derart auf das Statorjoch aufgebracht werden, dass die Nuten, durch die der Spulendraht für jeweils eine der Wicklungen geführt wird, durch wenigstens eine weitere Nut voneinander beabstandet sind. Für derartige verteilte Wicklungen ist die erfindungsgemäße Nutzung eines formstabilen Isolationselements besonders vorteilhaft, da derartige Wicklungen nur sehr aufwändig durch Isolationspapier isolierbar sind.

Vor dem Anordnen des formstabilen Isolationselements und/oder des weiteren formstabilen Isolationselements an der jeweiligen Stirnfläche des Statorjochs können die stirnflächenseitigen Abschnitte der ersten Wicklung und/oder der zweiten Wicklung durch eine Presseinrichtung in Richtung des Statorjochs gepresst werden. Hierdurch wird der erforderliche Bauraum des Stators reduziert. Zudem wird bei einer Nutzung von Wickelwerkzeugen eine leichtere Entfernbarkeit der Wickelwerkzeuge erreicht und die Führung des Spulendrahtes im Bereich der Stirnseiten des Statorjochs wird stabilisiert.

Erfindungsgemäß ist es möglich, dass das erste Isolationselement kraftschlüssig und/oder formschlüssig mit dem Statorjoch verbunden wird und/oder dass das weitere Isolationselement kraftschlüssig und/oder formschlüssig mit dem Statorjoch und/oder dem Isolationselement verbunden wird.

Neben dem erfindungsgemäßen Verfahren betrifft die Erfindung einen Stator für eine elektrische Maschine, umfassend ein Statorjoch mit mehreren Nuten, die sich zwischen zwei Stirnflächen des Statorjochs erstrecken, wenigstens eine einer ersten Phase zugeordnete ersten Wicklung eines Spulendrahtes, die derart aufgebracht ist, dass der Spulendraht in einer ersten Gruppe der Nuten geführt ist und dass jeweils ein stirnflächenseitiger Abschnitt der ersten Wicklung entlang der beiden Stirnflächen des Statorjochs geführt ist, und wenigstens eine einer zweiten Phase zugeordnete zweite Wicklung des Spulendrahtes, die derart aufgebracht ist, dass der Spulendraht in einer zweiten Gruppe der Nuten geführt ist, wobei an den Stirnseiten des Statorjochs jeweils ein Isolationselement angeordnet ist, das einen ringförmigen Auflageabschnitt umfasst, dessen dem Statorjoch zugewandte Innenfläche auf dem stirnflächenseitigen Abschnitt der wenigstens einen ersten Wicklung aufliegt und auf dessen von dem Statorjoch abgewandten Außenfläche der stirnflächenseitige Abschnitt der wenigstens einen zweiten Wicklung aufliegt, wobei der Stator durch das erfindungsgemäße Verfahren hergestellt ist.

Es ist möglich, dass an den Stirnseiten des Statorjochs zusätzlich jeweils ein weiteres Isolationselement angeordnet ist, das einen ringförmigen Auflageabschnitt umfasst, dessen dem Statorjoch zugewandte Innenfläche auf dem stirnflächenseitigen Abschnitt der wenigstens einen zweiten Wicklung aufliegt und auf dessen dem Statorjoch abgewandten Außenfläche ein stirnflächenseitiger Abschnitt wenigstens einer einer dritten Phase zugeordneten dritten Wicklung des Spulendrahts aufliegt, deren Spulendraht in einer dritten Gruppe der Nuten geführt ist.

Das Statorjoch kann zylinderförmig sein, wobei die Isolationselemente und/oder die weiteren Isolationselemente jeweils mehrere gewinkelt zu dem Auflageabschnitt in Richtung des Statorjochs abragende Axialabschnitte aufweisen, die in Umfangsrichtung und/oder in Radialrichtung des Statorjochs jeweils zwischen der ersten Wicklung oder einer der ersten Wicklungen und der zweiten Wicklung oder einer der zweiten Wicklungen und/oder der dritten Wicklung oder einer der dritten Wicklungen und/oder zwischen der zweiten Wicklung oder einer der zweiten Wicklungen und der dritten Wicklung oder einer der dritten Wicklungen angeordnet sind.

Die Axialabschnitte sind vorzugsweise eben. Sie können zumindest teilweise jeweils in einer Ebene liegen, die durch einen Vektor in Axialrichtung und einen Vektor in Radialrichtung des Statorjochs aufgespannt ist.

Erfindungsgemäß ist es möglich, dass das Isolationselement kraftschlüssig und/oder formschlüssig an dem Statorjoch gehaltert ist und/oder dass das weitere Isolationselement kraftschlüssig und/oder formschlüssig an dem Isolationselement und/oder dem Statorjoch gehaltert ist.

Zudem betrifft die Erfindung eine elektrische Maschine, die einen erfindungsgemäßen Stator umfasst. Die elektrische Maschine kann insbesondere ein Antriebsmotor für ein Kraftfahrzeug sein.

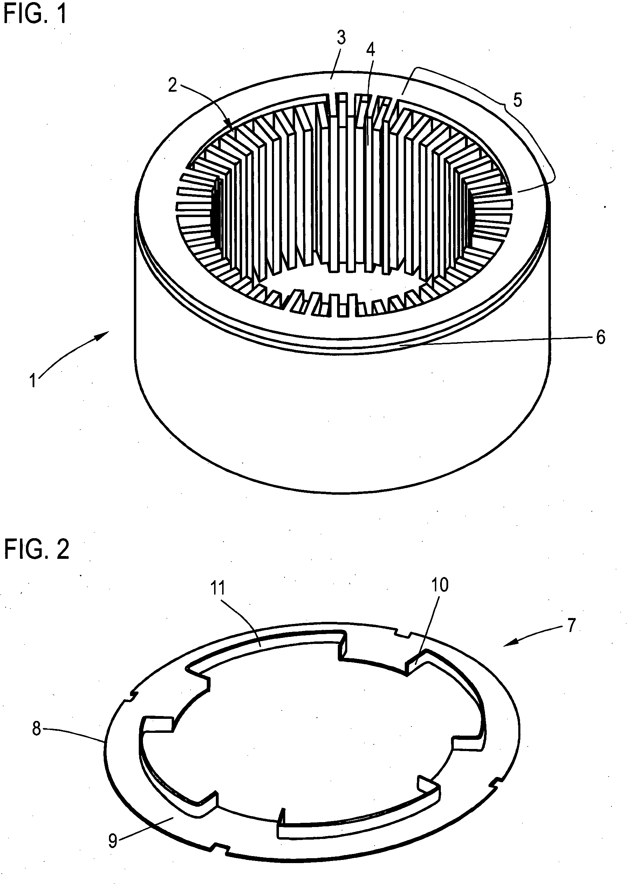

Weitere Vorteile und Einzelheiten der Erfindung ergeben sich aus dem folgenden Ausführungsbeispiel sowie den zugehörigen Zeichnungen. Dabei zeigen die Figuren 1 bis 5 schematisch ausgewählte Herstellungsschritte eines Ausführungsbeispiels des erfindungsgemäßen Verfahrens zur Herstellung eines Stators.

Fig. 1 zeigt einen Zustand des unfertigen Stators, in dem bereits erste Wicklungen 3, die einer ersten Phase zugeordnet sind, auf ein Statorjoch 1 aufgebracht sind, wobei die ersten Wicklungen 3 im Bereich der Stirnfläche 6 des Statorjochs 1 bereits gepresst sind. Die gepressten ersten Wicklungen 3 sind aus Übersichtlichkeitsgründen schematisch als kompakter Körper dargestellt. Dieser umfasst jene Bereiche, in denen der Spulendraht geführt ist, also die Nuten 4 einer ersten Gruppe, durch die der Spulendraht der ersten Wicklungen 3 geführt ist, sowie die stirnflächenseitigen Abschnitte der ersten Wicklungen 3, die auf der Stirnfläche 6 des Statorjochs aufliegen.

Um zu dem in Fig. 1 dargestellten Zustand zu gelangen, wird zunächst das Statorjoch 1 bereitgestellt, das mehrere Nuten 2, 4 aufweist, die sich zwischen den zwei Stirnflächen 6 des Statorjochs 1 erstrecken. Das Statorjoch 1 kann beispielsweise hergestellt werden, indem einzelne Lagen aus Elektroblech gestanzt und in Axialrichtung des zylinderförmigen Statorjochs 1 miteinander verklebt oder verschweißt werden.

Auf das Statorjoch 1 werden die der ersten Phase zugeordneten ersten Wicklungen 3 aufgebracht. Dies erfolgt vorzugsweise durch ein Nadelwickeln. Bei dem Nadelwickeln wird das Statorjoch 1 drehbar gelagert. Indem abwechselnd das Statorjochs 1 rotiert und eine Nadel durch die Nuten 4 der ersten Gruppe geführt werden, werden die einzelnen ersten Wicklungen 3 auf das Statorjoch 1 aufgebracht. Die Nadel bildet eine Drahtführdüse, die den Draht zum Statorjoch 1 führt. Die ersten Wicklungen 3 werden in Form von verteilten Wicklungen auf das Statorjoch 1 aufgebracht. Hierzu wird die Drahtführdüse zunächst entlang einer ersten der Nuten 4 der ersten Gruppe geführt, um den Spulendraht in dieser abzulegen. Anschließend wird der Spulendraht an mehreren Nuten 2 im Bereich 5 vorbeigeführt, in die im Rahmen der ersten Wicklung 3 kein Spulendraht eingebracht werden soll. Hierzu wird der Spulendraht entlang der Stirnfläche 6 des Statorjochs 1 geführt. Anschließend wird der Spulendraht durch Führen der Drahtführdüse durch eine zweite Nut 4 der ersten Gruppe in dieser abgelegt und auf der in Fig. 1 nicht gezeigten Rückseite des Statorjochs 1 an der gegenüberliegenden Stirnfläche zurück zur ersten Nut 4 der ersten Gruppe geführt. Dieser Vorgang wird mehrfach wiederholt, um eine Spule der ersten Gruppe zu wickeln.

Um den Spulendraht im Bereich 5 an der Stirnfläche 6 des Statorjochs 1 zu haltern, können an jenen Bereichen 5, die die Nuten 2 umfassen, in die kein Spulendraht eingebracht werden soll, Wickelwerkzeuge angebracht werden. Diese können beispielsweise an den Nuten 2 verklemmt werden und diese stirnflächenseitig vollständig bedecken, um sie für nachfolgende Wickelvorgänge der weiteren Phasen freizuhalten. Nach dem Aufbringen der ersten Wicklungen 3 können diese komprimiert werden und die Wickelwerkzeuge können anschließend entfernt werden, womit der in Fig. 1 dargestellte Zustand erreicht ist.

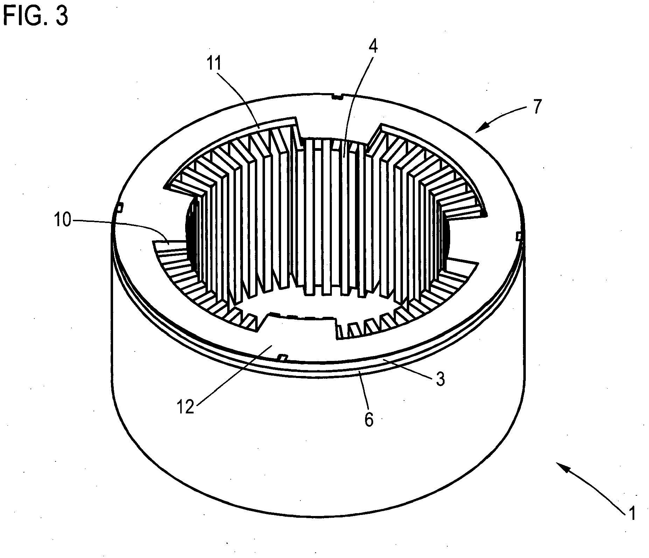

Anschließend wird jeweils ein in Fig. 2 gezeigtes formstabiles Isolationselement 7 an der Stirnfläche 6 sowie der nicht gezeigten gegenüberliegenden Stirnfläche des Statorjochs 1 angeordnet. Das Isolationselement 7 ist in Fig. 2 in einer Ansicht dargestellt, die die im Montagezustand dem Statorjoch zugewandten Innenfläche 9 des Isolationselements zeigt. Fig. 3 zeigt die Montageposition des Isolationselements 7 an der Stirnfläche 6 des Statorjochs, wobei das Isolationselement 7 mit seiner Innenfläche 9 auf den stirnflächenseitigen Abschnitten der ersten Wicklungen 3 aufsitzt.

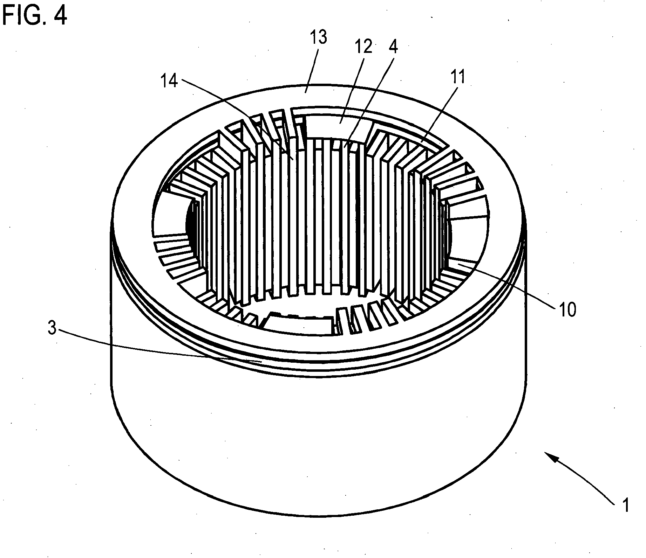

Das Isolationselement 7 kann aus Kunststoff spritzgegossen sein und weist vorzugsweise eine geringe Dicke auf, beispielsweise von weniger als einem Millimeter. Das Isolationselement 7 weist einen ringförmigen Auflageabschnitt 8 auf, der die Innenfläche 9 sowie eine vom Statorjoch 1 im Montagezustand abgewandte Außenfläche 12 ausbildet. Der Auflageabschnitt 8 dient zur Isolation zwischen den ersten Wicklungen der ersten Phase und den anschließend aufgebrachten, in Fig. 4 gezeigten, zweiten Wicklungen 13 der zweiten Phase in Axialrichtung des zylinderförmigen Statorjochs 1. Zugleich wird das Aufbringen der zweiten Wicklungen 13 unterstützt, da durch die Außenfläche 12 eine ebene Auflagefläche zum Aufbringen der zweiten Wicklungen 13 der zweiten Gruppe bereitgestellt wird.

Um die ersten Wicklungen 3 der ersten Gruppe auch in Radial- und in Umfangsrichtung des Statorjochs 1 von den zweiten Wicklungen 13 der zweiten Gruppe zu isolieren, weist das Isolationselement 7 zudem Axialabschnitte 10, 11 auf, die gewinkelt, vorzugsweise im Wesentlichen senkrecht, von dem Auflageabschnitt 8 abstehen. Nach dem Anordnen des Isolationselements 7 an der Stirnfläche 6 des Statorjochs 1 erstrecken sich die Axialabschnitte 10, 11 ausgehend von dem Auflageabschnitt 8 in Richtung des Statorjochs 1. Die Axialabschnitte 10 liegen jeweils in einer Ebene, die durch einen Vektor in Radialrichtung und einen Vektor in Axialrichtung des ringförmigen Auflageabschnitts und somit des Statorjochs 1 aufgespannt wird. Die Axialabschnitte 11 weisen die Form von Abschnitten eines Zylindermantels auf und stehen im Wesentlichen senkrecht auf den Axialabschnitten 10. Das Isolationselement 7 kann zudem nicht gezeigte Befestigungsabschnitte aufweisen, über die das Isolationselement 7 kraft- oder formschlüssig mit dem, Statorjoch 1 verbindbar ist. Insbesondere können diese in Ausnehmungen des Statorjochs 1 einrasten.

Nach dem Aufbringen der Isolationselemente 7 an den Stirnflächen 6 des Statorjochs 1 wird die in Fig. 4 dargestellte zweite Wicklung 13 der zweiten Phase aufgebracht. Auch dies kann, wie zu Fig. 1 erläutert, durch Nadelwickeln erfolgen. Das Wickeln erfolgt wie zu Fig. 1 erläutert, mit dem Unterschied, dass der Spulendraht durch die Nuten 14 der zweiten Gruppe geführt wird und die stirnflächenseitigen Abschnitte der zweiten Wicklungen 13 nicht auf der Stirnfläche 6 des Statorjochs 1 selbst sondern auf der Außenfläche 12 des Isolationselements 7 geführt werden. Hierdurch werden die zweiten Wicklungen 13 der zweiten Phase von den ersten Wicklungen 3 der ersten Phase radial, axial und in Umfangsrichtung durch das Isolationselement 7 voneinander getrennt und somit gegeneinander isoliert. Das weitere Isolationselement 15 kann zudem nicht gezeigte Befestigungsabschnitte zur kraft- oder formschlüssigen Befestigung, insbesondere zu Verrastung, an dem Isolationselement 7 und/oder an dem Statorjoch 1 aufweisen.

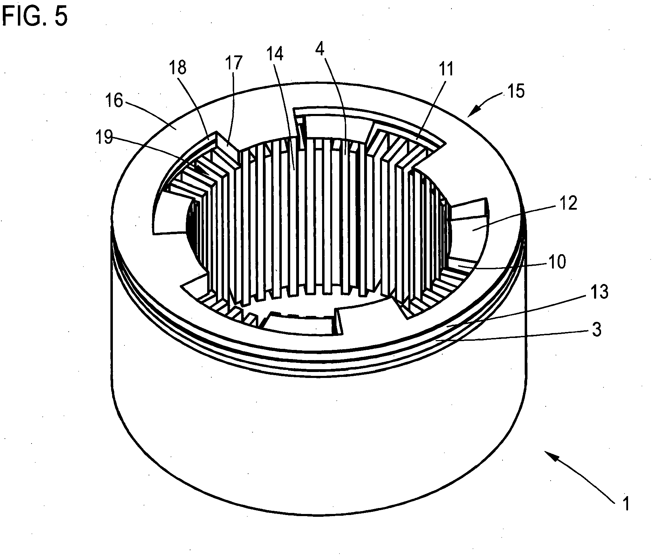

Nach dem Aufbringen und Pressen der zweiten Wicklung kann, wie in Fig. 5 gezeigt ist, jeweils ein weiteres Isolationselement 15 an den Stirnflächen 6 des Statorjochs 1 angeordnet werden, indem es mit einer nicht gezeigten, dem Statorjoch zugewandten Innenfläche auf die stirnflächenseitigen Abschnitte der zweiten Wicklungen 13 aufgesetzt wird. Das weitere Isolationselement 15 entspricht im Wesentlichen dem Isolationselement 7. Die Axialabschnitte 17 sind etwas länger ausgebildet als die Axialabschnitte 10 des Isolationselements 7, um das Statorjoch zu erreichen und somit eine zuverlässige Isolation der zweiten Wicklungen der zweiten Gruppe gegenüber den noch aufzubringenden dritten Wicklungen einer dritten Gruppe zu ermöglichen. Die Axialabschnitte 18 entsprechend den Axialabschnitten 11 des Isolationselements 7.

Ausgehend von dem in Fig. 5 gezeigten Zustand können anschließend dritte Wicklungen einer dritten Phase auf das Statorjoch 1 aufgebracht werden. Dies kann ebenfalls durch Nadelwickeln erfolgen, wobei der Spulendraht durch die Nuten 19 geführt wird und die stirnflächenseitigen Abschnitte der dritten Wicklungen entlang der Außenfläche 16 des weiteren Isolationselements 15 geführt werden können.

Durch das beschriebene Vorgehen kann ein mehrphasiger Stator hergestellt werden, wobei eine einfache, insbesondere automatisiert durchführbare, Isolation der einzelnen Phasen gegeneinander erreicht werden kann und dennoch ein geringer Bauraumbedarf erreicht wird, da auf fest mit dem Statorjoch 1 verbundene Endscheiben zur Halterung von Wicklungen verzichtet werden kann.

## Patentansprüche

1. Verfahren zur Herstellung eines Stators einer elektrischen Maschine, umfassend die Schritte:
- Bereitstellen eines Statorjochs (1) mit mehreren Nuten (2, 4, 14, 19), die sich zwischen zwei Stirnflächen (6) des Statorjochs (1) erstrecken,
- Aufbringen wenigstens einer einer ersten Phase zugeordneten ersten Wicklung (3) auf das Statorjoch (1) durch Einbringen eines Spulendrahtes in eine erste Gruppe der Nuten (4) derart, dass sich entlang der beiden Stirnflächen (6) des Statorjochs (1) jeweils ein stirnflächenseitiger Abschnitt der ersten Wicklung (3) erstreckt,
- Anordnen jeweils eines formstabilen Isolationselements (7) an beiden Stirnflächen (6) des Statorjochs (1), wobei das Isolationselement (7) auf den jeweiligen stirnflächenseitigen Abschnitt der ersten Wicklung (3) lose aufgesetzt wird,
- Aufbringen wenigstens einer einer zweiten Phase zugeordneten zweiten Wicklung (13) auf das Statorjoch (1) durch Einbringen des Spulendrahtes in eine zweite Gruppe der Nuten (14) derart, dass sich entlang der von dem Statorjoch (1) abgewandten Außenflächen (12) der Isolationselemente (7) jeweils ein stirnflächenseitiger Abschnitt der zweiten Wicklung (13) erstreckt, wobei die Isolationselemente (7) im Rahmen des Aufbringens der zweiten Wicklung (13) durch ein Wickelwerkzeug gehaltert werden, das nach dem Aufbringen der zweiten Wicklung entfernt wird, wonach die zweite Wicklung die Isolationselemente (7) haltert.

2. Verfahren nach Anspruch 1,
**dadurch gekennzeichnet,**
**dass** nach dem Aufbringen der zweiten Wicklung (13) an beiden Stirnflächen (6) des Statorjochs (1) jeweils ein weiteres formstabiles Isolationselement (15) angeordnet wird, wonach wenigstens eine einer dritten Phase zugeordnete dritte Wicklung durch Einbringen des Spulendrahtes in eine dritte Gruppe der Nuten (19) derart auf das Statorjoch (1) aufgebracht wird, dass sich entlang einer von dem Statorjoch (1) abgewandten Außenfläche (16) des jeweiligen weiteren Isolationselements (15) ein jeweiliger stirnflächenseitiger Abschnitt der dritten Wicklung erstreckt.

3. Verfahren nach Anspruch 1 oder 2,
**dadurch gekennzeichnet,**
**dass** Isolationselemente (7) und/oder weitere Isolationselemente (15) verwendet werden, die wenigstens einen Axialabschnitt (10, 11) umfassen, der sich nach dem Anordnen des jeweiligen Isolationselements (7) und/oder weiteren Isolationselements (15) an der Stirnfläche (6) gewinkelt zu der Außenfläche (12) in Richtung des Statorjochs (1) erstreckt.

4. Verfahren nach einem der vorangehenden Ansprüche,
**dadurch gekennzeichnet,**
**dass** die Isolationselemente (7) und/oder die weiteren Isolationselemente (15) aus Kunststoff spritzgegossen werden.

5. Verfahren nach einem der vorangehenden Ansprüche,
**dadurch gekennzeichnet,**
**dass** die erste und/oder die zweite und/oder die dritte Wicklung (3, 13) durch Nadelwickeln auf das Statorjoch (1) aufgebracht werden.

6. Verfahren nach Anspruch 5,
**dadurch gekennzeichnet,**
**dass** der Spulendraht der ersten und/oder der zweiten und/oder der dritten Wicklung (3, 13) während des Nadelwickelns stirnflächenseitig durch wenigstens ein trennbar mit dem Statorjoch (1) verbundenes Wickelwerkzeug gehaltert wird, das nach dem Aufbringen der wenigstens einen Wicklung (3, 13) der jeweiligen Phase von dem Statorjoch (1) entfernt wird.

7. Verfahren nach einem der vorangehenden Ansprüche,
**dadurch gekennzeichnet,**
**dass** die erste und/oder die zweite und/oder die dritte Wicklung (3, 13) derart auf das Statorjoch (1) aufgebracht werden, dass die Nuten (4, 14, 19), durch die der Spulendraht für die oder für jeweils eine der Wicklungen (3, 13) geführt wird, durch wenigstens eine weitere Nut (2) voneinander beabstandet sind.

8. Verfahren nach einem der vorangehenden Ansprüche,
**dadurch gekennzeichnet,**
**dass** vor dem Anordnen des Isolationselements (7) und/oder des weiteren Isolationselements (15) an der jeweiligen Stirnfläche (6) des Statorjochs (1) die stirnflächenseitigen Abschnitte der ersten Wicklung (3) und/oder der zweiten Wicklung (13) durch eine Presseinrichtung in Richtung des Statorjochs (1) gepresst werden.

9. Verfahren nach einem der vorangehenden Ansprüche,
**dadurch gekennzeichnet, dass** das erste Isolationselement (7) kraftschlüssig und/oder formschlüssig mit dem Statorjoch (1) verbunden wird und/oder dass das weitere Isolationselement (15) kraftschlüssig und/oder formschlüssig mit dem Statorjoch (1) und/oder dem Isolationselement (7) verbunden wird.

10. Stator für eine elektrische Maschine, umfassend ein Statorjoch (1) mit mehreren Nuten (2, 4, 14, 19), die sich zwischen zwei Stirnflächen (6) des Statorjochs (1) erstrecken, wenigstens eine einer ersten Phase zugeordnete ersten Wicklung (3) eines Spulendrahtes, die derart aufgebracht ist, dass der Spulendraht in einer ersten Gruppe der Nuten (4) geführt ist und dass jeweils ein stirnflächenseitiger Abschnitt der ersten Wicklung entlang der beiden Stirnflächen (6) des Statorjochs (1) geführt ist, und wenigstens eine einer zweiten Phase zugeordnete zweite Wicklung (13) des Spulendrahtes, die derart aufgebracht ist, dass der Spulendraht in einer zweiten Gruppe der Nuten (14) geführt ist, wobei an den Stirnseiten (6) des Statorjochs (1) jeweils ein Isolationselement (7) angeordnet ist, das einen ringförmigen Auflageabschnitt (8) umfasst, dessen dem Statorjoch (1) zugewandte Innenfläche (9) auf dem stirnflächenseitigen Abschnitt der wenigstens einen ersten Wicklung (3) aufliegt und auf dessen von dem Statorjoch (1) abgewandten Außenfläche (12) der stirnflächenseitige Abschnitt der wenigstens einen zweiten Wicklung (13) aufliegt,
**dadurch gekennzeichnet,**
**dass** er durch ein Verfahren gemäß einem der vorangehenden Ansprüche hergestellt ist.

11. Stator nach Anspruch 10,
**dadurch gekennzeichnet,**
**dass** an den Stirnseiten (6) des Statorjochs (1) zusätzlich jeweils ein weiteres Isolationselement (15) angeordnet ist, das einen ringförmigen Auflageabschnitt umfasst, dessen dem Statorjoch (1) zugewandte Innenfläche auf dem stirnflächenseitigen Abschnitt der wenigstens einen zweiten Wicklung aufliegt und auf dessen dem Statorjoch (1) abgewandten Außenfläche (16) ein stirnflächenseitiger Abschnitt wenigstens einer einer dritten Phase zugeordneten dritten Wicklung des Spulendrahts aufliegt, deren Spulendraht in einer dritten Gruppe der Nuten (19) geführt ist.

12. Stator nach Anspruch 10 oder 11,
**dadurch gekennzeichnet,**
**dass** das Statorjoch (1) zylinderförmig ist, wobei die Isolationselemente (7) und/oder die weiteren Isolationselemente (15) jeweils mehrere gewinkelt zu dem Auflageabschnitt (8) in Richtung des Statorjochs (1) abragende Axialabschnitte (10, 11) aufweisen, die in Umfangsrichtung und/oder in Radialrichtung des Statorjochs (1) jeweils zwischen der ersten Wicklung (3) oder einer der ersten Wicklungen (3) und der zweiten Wicklung (13) oder einer der zweiten Wicklungen (13) und/oder der dritten Wicklung oder einer der dritten Wicklungen und/oder zwischen der zweiten Wicklung oder einer der zweiten Wicklungen und der dritten Wicklung oder einer der dritten Wicklungen angeordnet sind.

13. Stator nach einem der Ansprüche 10 bis 12,
**dadurch gekennzeichnet,**
**dass** das Isolationselement (7) kraftschlüssig und/oder formschlüssig an dem Statorjoch (1) gehaltert ist und/oder dass das weitere Isolationselement (15) kraftschlüssig und/oder formschlüssig an dem Isolationselement (7) und/oder dem Statorjoch (1) gehaltert ist.

14. Elektrische Maschine,
**dadurch gekennzeichnet,**
**dass** sie einen Stator nach einem der Ansprüche 10 bis 13 umfasst.

## Claims

1. Method for manufacturing a stator of an electric machine, comprising the steps:
- provision of a stator yoke (1) with a plurality of slots (2, 4, 14, 19), which extend between two end faces (6) of the stator yoke (1),
- application of at least one first winding (3) assigned to a first phase to the stator yoke (1) through introduction of a coil wire into a first group of the slots (4) in such a way that an end-face-side section of the first winding (3) extends along each of the two end faces (6) of the stator yoke (1),
- arranging of a dimensionally stable insulating element (7) on both end faces (6) of the stator yoke (1), whereby the insulating element (7) is placed loosely onto the particular end-face-side section of the first winding (3),
- application of at least one second winding (13) assigned to a second phase to the stator yoke (1) through introduction of the coil wire into a second group of the slots (14) in such a way that an end-face-side section of the second winding (13) extends along each of the outer surfaces (12) of the insulating elements (7) facing away from the stator yoke (1), whereby as part of the application of the second winding (13) the insulating elements (7) are secured by a winding tool, which is removed after the application of the second winding, after which the second winding secures the insulating elements (7).

2. Method according to claim 1, **characterised in that** after the application of the second winding (13) a further dimensionally stable insulating element (15) is arranged on each of the two end faces (6) of the stator yoke (1), after which at least one third winding assigned to a third phase is applied to the stator yoke (1) through introduction of the coil wire into a third group of the slots (19) in such a way that a particular end-face-side section of the third winding extends along an outer surface (16) of the particular further insulating element (15) facing away from the stator yoke (1).

3. Method according to claim 1 or 2, **characterised in that** insulating elements (7) and/or further insulating elements (15) are used, which comprise at least one axial section (10, 11), which after the arranging of the particular insulating element (7) and/or further insulating element (15) on the end face (6) extends angled to the outer surface (12) in the direction of the stator yoke (1).

4. Method according to any one of the above claims, **characterised in that** the insulating elements (7) and/or the further insulating elements (15) are injection-moulded from plastic.

5. Method according to any one of the above claims, **characterised in that** the first and/or the second and/or the third winding (3, 13) are applied onto the stator yoke (1) by means of needle winding.

6. Method according to claim 5, **characterised in that** the coil wire of the first and/or of the second and/or of the third winding (3, 13) is secured during the needle winding on the end-face side by means of at least one winding tool connected separably with the stator yoke (1), said tool being removed from the stator yoke (1) after the application of the at least one winding (3, 13) of the particular phase.

7. Method according to any one of the above claims, **characterised in that** the first and/or the second and/or the third winding (3, 13) are applied onto the stator yoke (1) in such a way that the slots (4, 14, 19), through which the coil wire for the windings or for any one of the windings (3, 13) is guided, are spaced apart by least one further slot (2).

8. Method according to any one of the above claims, **characterised in that**, before the arranging of the insulating element (7) and/or of the further insulating element (15) on the particular end face (6) of the stator yoke (1), the end-face-side sections of the first winding (3) and/or of the second winding (13) are pressed in the direction of the stator yoke (1) by means of a pressing device.

9. Method according to any one of the above claims, **characterised in that** the first insulating element (7) is connected with the stator yoke (1) by way of force-fitting and/or form-fitting and/or that the further insulating element (15) is connected with the stator yoke (1) and/or the insulating element (7) by way of force-fitting and/or form-fitting.

10. Stator for an electric machine, comprising a stator yoke (1) with a plurality of slots (2, 4, 14, 19), which extend between two end faces (6) of the stator yoke (1), at least one first winding (3) of a coil wire assigned to a first phase, said winding being applied in such a way that the coil wire is guided in a first group of the slots (4) and that an end-face-side section of the first winding is guided along each of the two end faces (6) of the stator yoke (1), and at least one second winding (13) of the coil wire assigned to a second phase, said winding being applied in such a way that the coil wire is guided in a second group of the slots (14), whereby there is applied on each end side (6) of the stator yoke (1) an insulating element (7), which comprises a ring-shaped support section (8), the inner surface (9) of which facing the stator yoke (1) lies on the end-face-side section of the at least one first winding (3) and on the outer surface (12) of which facing away from the stator yoke (1) the end-face-side section of the at least one second winding (13) lies, **characterised in that** it is manufactured by way of a method according to any one of the preceding claims.

11. Stator according to claim 10, **characterised in that** there is arranged additionally on each of the end sides (6) of the stator yoke (1) a further insulating element (15), which comprises a ring-shaped support section, the inner surface of which facing the stator yoke (1) lies on the end-face-side section of the at least one second winding and on the outer surface (16) of which facing away from the stator yoke (1) an end-face-side section of at least one third winding of the coil wire assigned to a third phase lies, the coil wire of said winding being guided in a third group of the slots (19).

12. Stator according to claim 10 or 11, **characterised in that** the stator yoke (1) is cylindrical, whereby the insulating elements (7) and/or the further insulating elements (15) each have a plurality of downward-projecting axial sections (10, 11) angled to the support section (8) in the direction of the stator yoke (1), which are each arranged in circumferential direction and/or in radial direction of the stator yoke (1) between the first winding (3) or one of the first windings (3) and the second winding (13) or one of the second windings (13) and/or the third winding or one of the third windings and/or between the second winding or one of the second windings and the third winding or one of the third windings.

13. Stator according to any one of claims 10 to 12, **characterised in that** the insulating element (7) is secured on the stator yoke (1) by way of force-fitting and/or form-fitting and/or that the further insulating element (15) is secured on the insulating element (7) and/or the stator yoke (1) by way of force-fitting and/or form-fitting.

14. Electric machine, **characterised in that** it comprises a stator according to any one of claims 10 to 13.

## Revendications

1. Procédé de fabrication d'un stator de machine électrique, comprenant les étapes consistant à :
- fournir une culasse statorique (1) munie de plusieurs gorges (2, 4, 14, 19) s'étendant entre deux faces terminales (6) de la culasse statorique (1),
- mettre en place au moins un premier enroulement (3) associé à une première phase sur la culasse statorique (1) par introduction d'un fil à bobiner dans un premier groupe des gorges (4) de telle manière que, respectivement une section, située du côté des faces terminales, du premier enroulement (3) s'étend le long des deux faces terminales (6) de la culasse statorique (1),
- agencer respectivement un élément isolant (7) indéformable au niveau des deux faces terminales (6) de la culasse statorique (1), dans lequel l'élément isolant (7) est placé mobile sur la section respective, située du côté des faces terminales, du premier enroulement (3),
- mettre en place au moins un deuxième enroulement (13) associé à une deuxième phase sur la culasse statorique (1) par introduction du fil à bobiner dans un deuxième groupe des gorges (14) de telle manière que respectivement une section, située du côté des faces terminales, du deuxième enroulement (13) s'étend le long des faces extérieures (12) des éléments isolants (7) détournées de la culasse statorique (1), dans lequel, lors de la mise en place du deuxième enroulement (13), les éléments isolants (7) sont maintenus grâce à un outil de bobinage qui est retiré après la mise en place du deuxième enroulement, après quoi le deuxième enroulement maintient les éléments isolants (7).

2. Procédé selon la revendication 1,
**caractérisé en ce que**
respectivement un élément isolant supplémentaire (15) indéformable est agencé au niveau des deux faces terminales (6) de la culasse statorique (1) après la mise en place du deuxième enroulement (13), après quoi au moins un troisième enroulement associé à une troisième phase est mis en place sur la culasse statorique (1) par introduction du fil à bobiner dans un troisième groupe des gorges (19) de telle manière qu'une section, située respectivement du côté des faces terminales, du troisième enroulement s'étend le long d'une face extérieure (16), détournée de la culasse statorique (1), de l'élément isolant supplémentaire (15) respectif.

3. Procédé selon la revendication 1 ou 2,
**caractérisé en ce que**
des éléments isolants (7) et/ou des éléments isolants supplémentaires (15), comprenant au moins une section axiale (10, 11) s'étendant en direction de la culasse statorique (1) de manière inclinée par rapport à la face extérieure (12) après l'agencement de l'élément isolant (7) et/ou de l'élément isolant supplémentaire (15) respectif au niveau de la face terminale (6), sont utilisés.

4. Procédé selon l'une quelconque des revendications précédentes,
**caractérisé en ce que**
les éléments isolants (7) et/ou les éléments isolants supplémentaires (15) sont moulés par injection à partir de plastique.

5. Procédé selon l'une quelconque des revendications précédentes,
**caractérisé en ce que**
le premier et/ou le deuxième et/ou le troisième enroulement (3, 13) sont mis en place sur la culasse statorique (1) par bobinage à aiguille.

6. Procédé selon la revendication 5,
**caractérisé en ce que**
le fil à bobiner du premier et/ou du deuxième et/ou du troisième enroulement (3, 13) est maintenu du côté face terminale pendant le bobinage à aiguille grâce à au moins un outil de bobinage relié de manière amovible à la culasse statorique (1) et qui est retiré de la culasse statorique (1) après la mise en place du au moins un enroulement (3, 13) de la phase respective.

7. Procédé selon l'une quelconque des revendications précédentes,
**caractérisé en ce que**
le premier et/ou le deuxième et/ou le troisième enroulement (3, 13) sont mis en place sur la culasse statorique (1) de telle manière que les gorges (4, 14, 19) à travers lesquelles est guidé le fil à bobiner destiné aux enroulements ou destiné à respectivement un des enroulements (3, 13) sont espacées les unes des autres grâce à au moins une gorge (2) supplémentaire.

8. Procédé selon l'une quelconque des revendications précédentes,
**caractérisé en ce que**
les sections, situées du côté face terminale, du premier enroulement (3) et/ou du deuxième enroulement (13) sont comprimées en direction de la culasse statorique (1) grâce à un dispositif de compression avant l'agencement de l'élément isolant (7) et/ou de l'élément isolant supplémentaire (15) au niveau de la face terminale (6) respective de la culasse statorique (1).

9. Procédé selon l'une quelconque des revendications précédentes,
**caractérisé en ce que**
le premier élément isolant (7) est relié par complémentarité de force et/ou de forme à la culasse statorique (1) et/ou **en ce que** l'élément isolant supplémentaire (15) est relié par complémentarité de force et/ou de forme à la culasse statorique (1) et/ou à l'élément isolant (7).

10. Stator pour machine électrique, comprenant une culasse statorique (1) munie de plusieurs gorges (2, 4, 14, 19) s'étendant entre deux faces terminales (6) de la culasse statorique (1), au moins un premier enroulement (3), associé à une première phase, d'un fil à bobiner mis en place de telle manière que le fil à bobiner est guidé dans un premier groupe des gorges (4) et de telle manière que respectivement une section, située du côté face terminale, du premier enroulement est guidée le long des deux faces terminales (6) de la culasse statorique (1), et au moins un deuxième enroulement (13), associé à une deuxième phase, du fil à bobiner mis en place de telle manière que le fil à bobiner est guidé dans un deuxième groupe des gorges (14), dans lequel respectivement un élément isolant (7) comprenant une section d'appui annulaire (8) dont la face intérieure (9) tournée vers la culasse statorique (1) repose sur la section, située du côté face terminale, du au moins un premier enroulement (3) et sur la face extérieure (12), détournée de la culasse statorique (1), de laquelle repose la section, située du côté face terminale, du au moins un deuxième enroulement (13), est agencé au niveau des faces terminales (6) de la culasse statorique (1),
**caractérisé en ce que**
ledit stator est fabriqué grâce à un procédé selon l'une quelconque des revendications précédentes.

11. Stator selon la revendication 10,
**caractérisé en ce que**
respectivement un élément isolant supplémentaire (15), comprenant une section d'appui annulaire dont la face intérieure tournée vers la culasse statorique (1) repose sur la section, située du côté des faces terminales, du au moins un deuxième enroulement et sur la face extérieure (16), détournée de la culasse statorique (1), de laquelle repose une section, située du côté des faces terminales, d'au moins un troisième enroulement du fil à bobiner, associé à une troisième phase et dont le fil à bobiner est guidé dans un troisième groupe des gorges (19), est agencé au niveau des faces terminales (6) de la culasse statorique (1).

12. Stator selon la revendication 10 ou 11,
**caractérisé en ce que**
la culasse statorique (1) est de forme cylindrique, dans lequel les éléments isolants (7) et/ou les éléments isolants supplémentaires (15) présentent respectivement plusieurs sections axiales (10, 11) faisant saillie en direction de la culasse statorique (1) de manière inclinée par rapport à la section d'appui (8) et agencées respectivement entre le premier enroulement (3) ou l'un des premiers enroulements (3) et le deuxième enroulement (13) ou l'un des deuxièmes enroulements (13) et/ou le troisième enroulement ou l'un des troisièmes enroulements et/ou entre le deuxième enroulement ou l'un des deuxièmes enroulements et le troisième enroulement ou l'un des troisièmes enroulements, dans la direction circonférentielle et/ou dans la direction radiale de la culasse statorique (1)

13. Stator selon l'une quelconque des revendications 10 à 12,
**caractérisé en ce que**
l'élément isolant (7) est maintenu par complémentarité de force et/ou de forme au niveau de la culasse statorique (1) et/ou **en ce que** l'élément isolant supplémentaire (15) est maintenu par complémentarité de force et/ou de forme au niveau de l'élément isolant (7) et/ou de la culasse statorique (1).

14. Machine électrique,
**caractérisée en ce que**
ladite machine comprend un stator selon l'une quelconque des revendications 10 à 13.
